**Europäisches Patentamt**

**European Patent Office**

**Office européen des brevets**

(19)

(11) Numéro de publication: **0 006 367**
**B1**

(12) **FASCICULE DE BREVET EUROPEEN**

(45) Date de publication du fascicule de brevet: **20.05.81**

(51) Int. Cl.³: **F 02 P 5/04, G 01 P 3/44, H 01 T 15/00**

(21) Numéro de dépôt: **79400292.3**

(22) Date de dépôt: **08.05.79**

(54) Dispositif de déclenchement, notamment de l'allumage d'un moteur à combustion interne.

(30) Priorité: **08.06.78 FR 7817157**

(43) Date de publication de la demande:
**09.01.80 Bulletin 80/1**

(45) Mention de la délivrance du brevet:
**20.05.81 Bulletin 81/20**

(84) Etats Contractants Désignés:
**DE GB IT**

(56) Documents cités:
**DE - A - 2 703 575**
**FR - A - 2 331 204**
**FR - A - 2 248 511**
**US - A - 4 009 378**

(73) Titulaire: **AUTOMOBILES PEUGEOT**
**75, avenue de la Grande Armée**
**F-75116 Paris (FR)**

(73) Titulaire: **SOCIETE ANONYME AUTOMOBILES CITROEN**
**117 à 167, Quai André Citroen**
**F-75747 Paris Cedex 15 (FR)**

(72) Inventeur: **Goux, Jacques**
**6 Rue Molière**
**F-91470 Limours (FR)**

(74) Mandataire: **Moncheny, Michel et al,**
**c/o Cabinet Lavoix 2 Place d'Estienne d'Orves**
**F-75441 Paris Cedex 09 (FR)**

Dispositif de déclenchement, notamment de l'allumage d'un moteur à combustion interne.

La présente invention due à la collaboration de Monsieur Jacques Goux, concerne un dispositif électronique pour commander le déclenchement d'une opération de fonctionnement sur une machine tournante. Elle s'applique plus particulièrement au déclenchement de l'allumage sur un moteur à combustion interne.

On sait que sur un moteur à combustion interne à allumage commandé, l'étincelle sur la bougie doit se produire pour une certaine position angulaire du vilebrequin définie par un angle d'avance par rapport au point mort haut.

Pour que le moteur fonctionne toujours dans les meilleures conditions, cet angle doit être constamment corrigé en fonction de divers paramètres de fonctionnement du moteur, notamment sa vitesse de rotation.

Tous les dispositifs connus d'allumage électronique comportent donc, notamment, des moyens de mesure de la vitesse de rotation du moteur et des moyens pour déclencher l'allumage en fonction de la vitesse mesurée. Ces dispositifs comprennent un ou deux capteurs magnétiques placés au voisinage d'un disque muni suivant les cas, d'une ou plusieurs dents ou encoches et tournant à la vitesse du moteur.

Avec les dispositifs utilisant un seul capteur, le calcul de la vitesse se fait de façon continue. Ces dispositifs présentent le risque d'être déréglés par un parasitage des circuits au moment de la production de l'étincelle, à moins de recourir à des moyens d'antiparasitage complexes ou coûteux.

Les dispositifs utilisant deux capteurs permettent d'éviter ces inconvénients car le calcul de la vitesse peut se faire sur une fraction de tour du vilebrequin, l'allumage étant déclenché sur l'autre fraction. Malheureusement, ces dispositifs présentent l'inconvénient d'être tributaires d'un positionnement angulaire précis des deux capteurs l'un par rapport à l'autre. Or, l'environnement d'un moteur est généralement assez encombré et il n'est pas tourjours possible de placer les capteurs où on le souhaite.

L'invention a principalement pour but de s'affranchir de cet inconvénient.

Elle a donc pour objet un dispositif de déclenchement, notamment de l'allumage d'un moteur à combustion interne comportant des moyens de mesure de la vitesse de rotation du moteur qui comprennent un premier et un second capteurs décalés l'un par rapport à l'autre d'un angle prédéterminé et un repère déplaçable devant les capteurs, monté sur un disque solidaire de l'arbre du moteur, et des moyens pour déclencher l'allumage en fonction de la vitesse de rotation mesurée, caractérisé en ce que lesdits moyens de mesure de la vitesse de rotation comprennent en outre, un premier diviseur programmable décompteur dont l'entrée est connectée à une horloge destinée à lui fournir des signaux à une fréquence fo et dont la sortie est connectée à un compteur destiné à compter les signaux délivrés par le diviseur programmable décompteur, la fréquence fo desdits signaux étant égale à la fréquence fo des signaux d'horloge divisée par la valeur de l'angle $\beta$ égal à la différence entre 360° et l'angle $\alpha$ de décalage entre le premier et le second capteurs, ledit compteur étant connecté à son tour à une entrée d'adresses d'une mémoire contenant différentes valeurs d'angles d'avance à l'allumage, la sortie de ladite mémoire étant reliée à un second diviseur programmable décompteur destiné à décompter les signaux mémorisés à une fréquence fd correspondant à un signal par unité angulaire de rotation du moteur, et, à la fin du décomptage, à produire un signal d'actionnement desdits moyens de déclenchement de l'allumage.

L'invention est exposée ci-après plus en détail à l'aide de dessins représentant à titre d'exemples, deux modes d'exécution.

Aux dessins annexés donnés uniquement à titre d'exemple.

—la Fig. 1 est un schéma de principe du dispositif de déclenchement suivant l'invention;

—la Fig. 2 est un schéma de principe d'une variante du dispositif de la Fig. 1;

—la Fig. 3 est un diagramme de l'avance en fonction de la vitesse angulaire;

—la Fig. 4 est un diagramme montrant le fontionnement du dispositif de l'invention.

—la Fig. 5 représente un mode de réalisation détaillé du dispositif de la Fig. 1.

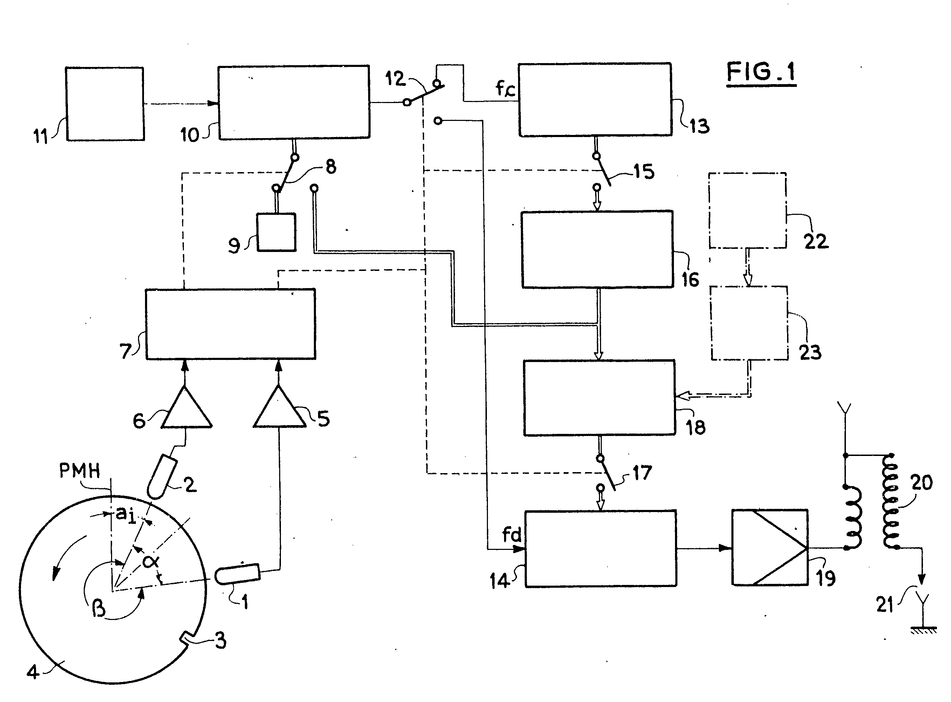

Le dispositif représenté schématiquement à la Fig. 1 comporte deux capteurs 1 et 2 destinés à détecter le passage d'un repère 3 constitué par exemple par une encoche ménagée à la périphérie du volant 4 d'un moteur à combustion interne non représenté. Le capteur 2 et le repère 3 sont positionnés pour que le passage du repère devant le capteur se fasse pour une position angulaire du vilebrequin correspondant à l'avance minimale à l'allumage $ai$. Le capteur 1 est positionné en avance de $\alpha$ degrés sur le capteur 2, la valeur de l'angle $\alpha$ étant telle que $\alpha$ est supérieur à l'amplitude maximale désirée d'avance par rapport à l'avance initiale.

Les capteurs 1 et 2 sont respectivement connectés à des amplificateurs de mise en forme 5 et 6 dont les sorties sont connectées chacune à une entrée d'un circuit basculeur 7. Une première sortie du basculeur 7 est connectée à un commutateur 8 destiné à relier un circuit 9 de mémorisation de la valeur d'angle $\beta$ égal à la différence entre 360° et l'angle $\alpha$ séparant les capteurs 1 et 2, à un premier diviseur programmable décompteur 10 dont l'entrée est connectée à la sortie d'un circuit l'horloge 11 et dont la sortie est connectée à un commutateur 12, lui-même connecté d'une part à un compteur 13 et d'autre part à un second diviseur programmable décompteur 14. Le commutateur 12 est commandé par la deuxième sortie du basculeur 7, de même qu'un premier contact 15 reliant la sortie du compteur 13 à l'entrée d'un circuit de verrouillage 16. Un deuxième contact 17 également commandé par la deuxième sortie du basculeur 7, est connecté entre le second diviseur programmable décompteur 14 et la sortie d'une mémoire 18 dont l'entrée est connectée à la sortie du circuit de verrouillage 16, cette dernière étant également connectée au premier diviseur programmable décompteur 10 par l'intermédiaire du commutateur 8. Il va de soi que les commutateurs 8, 12 et les contacts 15, 17 peuvent être commandés, indifféremment par l'une ou l'autre des sorties du basculeur 7.

La sortie du second diviseur programmable décompteur 14 est connectée à l'entrée d'un étage de puissance 19 d'alimentation de la bobine d'allumage 20 d'une bougie 21.

Lorsqu'on désire faire dépendre l'angle d'avance d'un couple de valeurs d'entrée, par exemple la vitesse de rotation du moteur et la pression dans la tubulure d'admission, on adjoint au circuit qui vient d'être décrit une partie représentée en trait mixte et comportant un capteur de pression 22 et un convertisseur analogique-numérique 23 connectés à des entrées d'adresses supplémentaires de la mémoire 18.

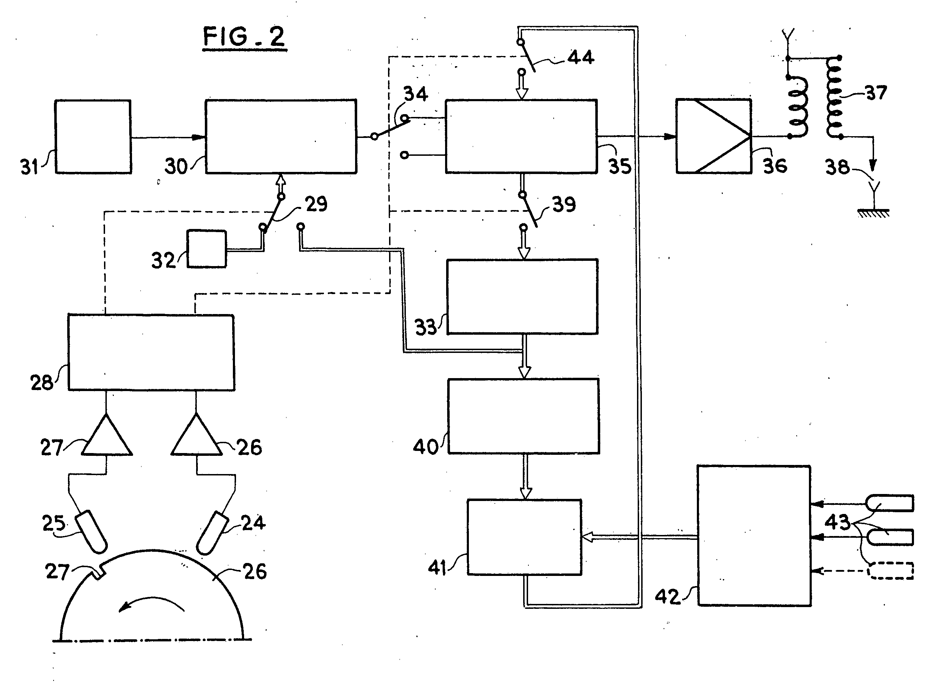

Le dispositif représenté à la Fig. 2 comporte comme celui de la Fig. 1, deux capteurs 24 et 25 placés au voisinage d'un disque 26 muni d'une encoche 27. Le positionnement des capteurs 24 et 25 est analogue à celui des capteurs 1 et 2 du dispositif représenté à la Fig. 1. Les sorties des capteurs 24 et 25 sont connectées par l'intermédiaire de circuits de mise en forme 26 et 27, aux entrées d'un circuit basculeur 28, dont une première sortie commande un commutateur 29. Ce dernier est destiné à connecter un diviseur programmable décompteur 30 recevant des impulsions d'une horloge 31, soit à un circuit 32 de mémorisation de l'angle $\beta$ égal à la différence entre 360° et l'angle séparant les deux capteurs 24 et 25, soit à un circuit de verrouillage 33. L'autre sortie du basculeur 28 commande un second commutateur 34 destiné à connecter le diviseur programmable décompteur 30 à une première ou à une seconde entrée d'un compteur-décompteur prépositionnable 35 dont la sortie est connectée à un étage de puissance 36 d'alimentation de la bobine d'allumage 37 des bougies telles que 38 d'un moteur non représenté.

Le compteur-décompteur 35 comporte une sortie connectée au circuit de verrouillage 33 par l'intermédiaire d'un contact 39 couplé au commutateur 34. La sortie du circuit de verrouillage 33 est connectée à une mémoire 40 et au deviseur programmable décompteur 30 par l'intermédiaire du commutateur 29. La sortie de la mémoire 40 est connectée à son tour à un additionneur binaire 41 dont une autre entrée est connectée, par l'intermédiaire d'un circuit 42 de corrections additives, à des capteurs 43 tels que des capteurs de pression, de température, etc.... La sortie de l'additionneur binaire est connectée à une entrée de prépositionnement du compteur-décompteur 35, par l'intermédiaire d'un autre contact 44 couplé au commutateur 34.

Comme dans l'exemple de la Fig. 1, les commutateurs 29, 34 et les contacts 39, 44 peuvent être commandés indifféremment, par l'une ou l'autre des sorties du basculeur 7.

Le dispositif décrit en référence à la Fig. 2 permet d'assurer au moyen d'un seul compteur-décompteur, les fonctions de comptage et de décomptage.

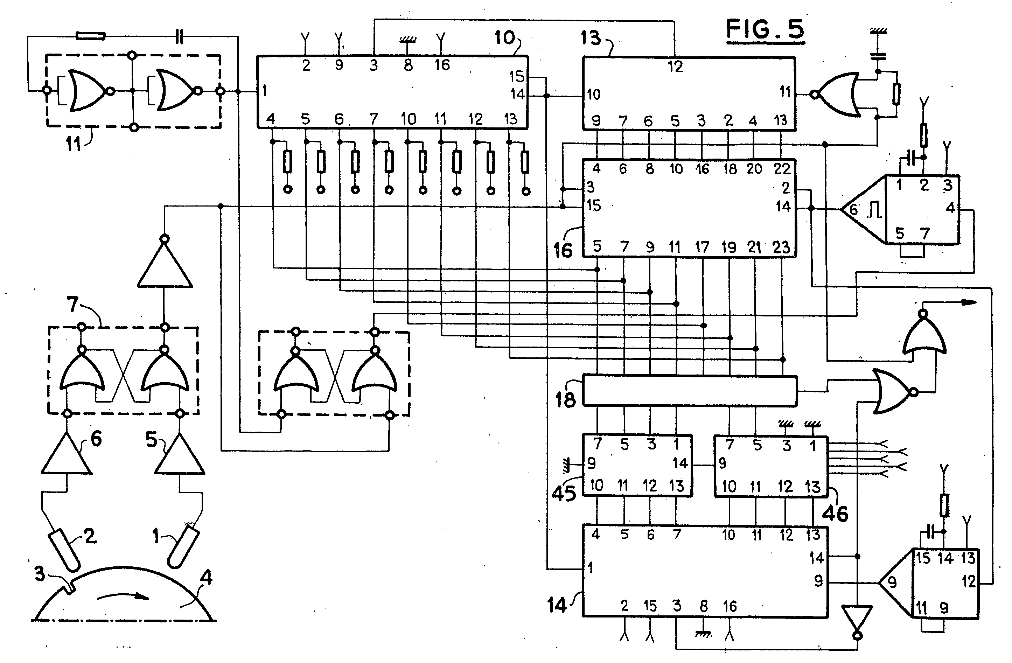

On a représenté à la Fig. 5, un mode de réalisation détaillé du dispositif de la Fig. 1. Les diverses fonctions nécessaires ont été réalisées en utilisant des circuits intégrés numériques en technologie C—MOS, fabriqués par les principales sociétés produisant des semi-conducteurs, telles que RCA, MOTOROLA, TEXAS INSTRUMENTS, SESCOSEM, etc... La série retenue pour le présent mode de réalisation est la série "4 000 de la Société RCA" présentant la gamme la plus complète de fonctions dont les principales utilisées pour l'application décrite sont:

—diviseurs programmables décompteurs 10 et 14 CD 40103
—compteur binaire à 12 bits 13 CD 4040
—circuit de verrouillage à 8 bits 16 CD 4508
—compteur-décompteur à 4 bits 35 du circuit de la Fig. 2 CD 4029

Ainsi qu'on peut le constater, le dispositif de la Fig. 5 comporte d'autres circuits qui ne sont pas représentés à la Fig. 1. Il s'agit par exemple d'additionneurs 45 et 46 interposés entre la mémoire 18 et le diviseur programmable décompteur 14. Dans le mode de réalisation, ces deux additionneurs sont des additionneurs à 4 bits du type CD 4008. Le circuit basculeur 7 est un circuit de type CD 4001, tandis que l'horloge 11 est constituée par la moitié d'un circuit de type 4001. Quand à la mémoire 18 elle est de type courant et de technologie indifférente, sa capacité étant généralement de 256 mots de 8 bits.

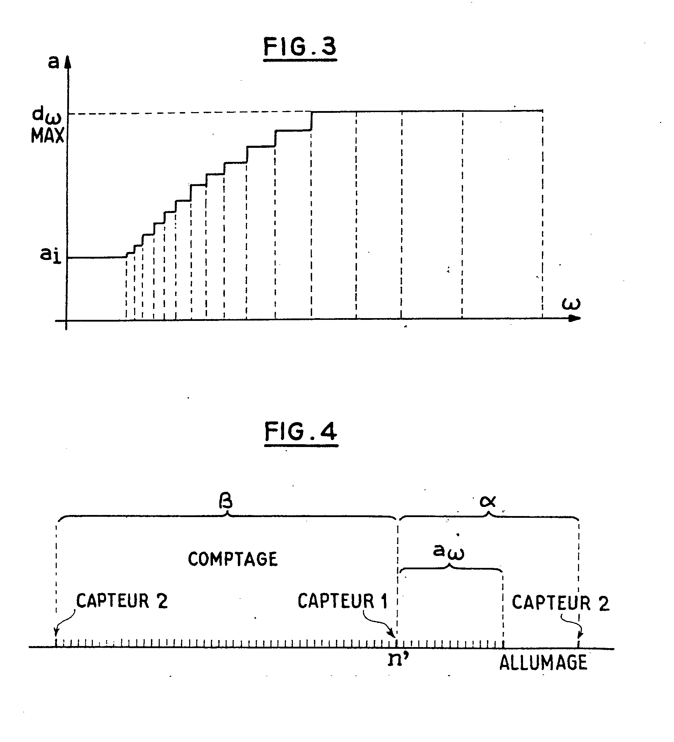

Le fonctionnement du dispositif de la Fig. 1 va maintenant être décrit en référence aux Fig. 3 et 4. Il s'agit de mesurer la vitesse angulaire $\omega$ du volant 4 du moteur par comptage d'une fréquence $f_c$ dans le compteur 13, lorsque le repère 3 parcourt l'angle $\beta$, la valeur $n$ trouvée servant à adresser la mémoire 18 qui contient les valeurs d'angles d'avance correspondant aux différentes vitesses angulaires, en prenant le capteur 1 comme origine des angles. Cette valeur d'angle a $\omega$ est chargée dans le diviseur décompteur programmable 14 au passage du repère devant le capteur 1, le décomptage s'effectuant alors avec une fréquence de décomptage $f_d$ correspondant à une impulsion pour chaque degré de rotation du volant 4. Le retour à zéro du décompteur 14 qui aura lieu a $\omega$ degrés après le capteur 1 est alors détecté. L'étincelle d'allumage est engendrée par le circuits classiques de haute tension 19, 20.

Ces opérations sont réalisées de la façon suivante.

Les signaux de sortie des capteurs 1 et 2 sont mis en forme par les étages 5 et 6 et commandent chacun une entrée de la bascule 7 dont l'état est fonction de la position du repère 3 par rapport aux capteurs 1 et 2.

Lorsque le repère parcourt l'angle $\beta$ après son passage devant le capteur 2, la bascule 7 commande le comptage dans le compteur 13 d'impulsions qui lui sont fournies à la fréquence $fc$ et qui sont obtenues à partir de l'horloge 11 qui délivre des impulsions de fréquence $fo$, ces implusions traversant le diviseur programmable décompteur 10, programmé par la bascule 7 pour diviser la fréquence de ces impulsions par la valeur de l'angle $\beta$ emmagasinée dans le circuit 9, pendant la phase de comptage. On obtient donc $fc = fo/\beta$.

Lorsque le repère 3 a parcouru l'angle $\beta$, la fin du comptage est détectée par le capteur 1 et la bascule 7 change d'état.

A ce moment, le compteur 13 aura reçu un nombre d'impulsions $n = fc \times t$, $t$ étant le temps nécessaire au repère 3 pour parcourir l'angle $\beta$. Le temps est lié à la vitesse angulaire par la relation $t = \beta/\omega$ ce qui donne $n = foo/\beta \times \beta/\omega = foo/\omega$.

Le changement d'état de la bascule 7 a pour conséquences:

—de mémoriser la valeur $n$ dans le circuit de verrouillage 16;

—de programmer le diviseur 10 afin qu'il assure une division par $n$;

—de charger le diviseur programmable décompteur 14 à la valeur a $\omega$ qui représente l'angle d'avance stocké dans la mémoire 18 à l'adresse $n$, $n$ étant représentatif d'une vitesse angulaire.

—d'initialiser le décomptage dans le diviseur programmable décompteur 14 à partir de cette valeur a $\omega$ et avec une fréquence $f_d$ engendrée par le diviseur programmable 10 et l'horloge 11, cette fréquence étant telle que $f_d = fo/n$. Comme par ailleurs $n = fo/\omega$, on obtient $f_d = \omega$.

La fréquence étant exprimée en impulsions par seconde et la vitesse $\omega$, en degrés par seconde, on voit que chaque impulsion délivrée à la fréquence fd correspond à une rotation de 1 degré, de sorte que le diviseur programmable décompteur 14 atteint zéro lorsque le repère 3 a parcouru a $\omega$ degrés après le passage devant le capteur 1.

Le diviseur programmable décompteur 14 engendre un signal lorsqu'il atteint la valeur zéro. Ce signal, par l'intermédiaire de l'étage de puissance 19 et de la bobine 20 provoque l'apparition d'une étincelle sur la bougie 21.

Cette étincelle d'allumage se produit pour une position du repère 3 située entre les capteurs 1 et 2, à l'intérieur de l'angle $\alpha$. Au passage du repère 3 devant le capteur 2, la bascule 7 retrouve sa position initiale et déclenche un nouveau cycle de comptage.

Le dispositif qui vient d'être décrit présente les particularités suivantes.

Pour la mesure de la vitesse angulaire $\omega$, le système utilise entre l'horloge 11 délivrant la fréquence $fo$ et le compteur 13 qui totalise jusqu'au nombre $n$, un diviseur programmable décompteur 10, dont le facteur de division est choisi égal à la valeur de l'angle $\beta$ exprimé en degrés, pendant lequel on effectue cette mesure.

Ceci permet d'adapter le système à toute réalisation indépendamment de l'angle $\beta$ choisi ou imposé, sand aucune modification de la structure, en donnant toujours la même valeur à $n$ pour une même vitesse $\omega$, quels que soient le moteur utilisé et la position des capteurs sur celui-ci.

Pendant la phase de décomptage, au terme de laquelle le retour à zéro du décompteur 14 doit engendrer l'étincelle d'allumage, on utilise la méme horloge 11 et le même circuit diviseur programmable décompteur 10, mais dont le facteur de division est choisi égal à la veleur $n$ mesurée durant la phase de comptage précédente, ce qui permet de disposer, à la sortie du diviseur programmable décompteur 10, d'une fréquence de décomptage $f_d$ telle que chaque impulsion corresponde à un degré de rotation du volant du moteur, quelles que soient la vitesse angulaire et la position des capteurs sur celui-ci. Ceci permet de stocker directement dans la mémoire 18 des valeurs d'avance exprimées en degrés.

Les phases de comptage et de décomptage étant successives et sans recouvrement, il est facile de remplacer le compteur 13 et le décompteur 14 par un seul circuit compteur-décompteur dans le but de simplifier la réalisation. Un tel remplacement est assuré dans le dispositif représenté schématiquement à la Fig. 2.

Le stockage en mémoire de valeurs d'angle en degrés facilite la correction de l'avance qui est fonction de la vitesse angulaire ainsi engendrée, par un ou plusieurs paramètres extérieurs:

—les corrections par addition ou soustraction sont facilement obtenues en intercalant entre la mémoire 18 et le décompteur 14 un ou plusieurs circuits additionneurs numériques qui reçoivent des informations de correction des capteurs correspondants. Un tel agencement est représenté à la Fig. où l'on voit des additionneurs 14.

—les corrections du type tridimensionnel, c'est à-dire lorsque chaque valeur d'angle d'avance dépend d'un couple de valeurs d'entrée (par exemple vitesse-pression) sont obtenues en utilisant une mémoire possédant des entrées d'adresses supplémentaires, ou un réseau logique programmable à grand nombre d'entrées. Un tel agencement est représenté par la partie en trait mixte du schéma de la Fig. 1.

Le calcul de la vitesse $\omega$ par comptage des impulsions d'horloge donne un nombre $n$ inversement proportionnel à $\omega$. Ce nombre est donc d'autant plus grand que la vitesse angulaire est plus faible, ce qui permet une définition serrée de l'avance pour de très faibles variations de vitesse aux bas régimes où l'angle évolue rapidement et une définition de plus en plus large vers les hauts régimes où l'angle devient progressivement constant. Ce phénomène peut être aisément observé sur la courbe de la Fig. 3 qui représente la variation de l'avance en fonction de la vitesse angulaire $\omega$.

**Revendications**

1. Dispositif de déclenchement notamment de l'allumage d'un moteur à combustion interne comportant des moyens de mesure de la vitesse de rotation du moteur qui comprennent un premier et un second capteurs (1, 2; 24 25) decalés l'un par rapport à l'autre d'un angle prédéterminé et un repère déplaçable devant les capteurs, monté sur un disque(4; 26) (3; 27) solidaire de l'arbre du moteur, et des moyens pour déclencher l'allumage (19, 20, 21; 36, 37, 38) en fonction de la vitesse de rotation mesurée, caractérisé en ce que lesdits moyens de mesure de la vitesse de rotation comprennent en outre, un premier diviseur programmable décompteur (10; 30) dont l'entrée est connectée à une horloge (11; 31) destinée à lui fournir des signaux à une fréquence fo et dont la sortie est connectée à un compteur (13; 35) destiné à compter les signaux délivrés par le diviseur programmable décompteur (10; 30), la fréquence fc desdits signaux étant égale à la fréquence fo des signaux d'horloge divisée par la valeur de l'angle $\beta$ égal à la différence entre 360° et l'angle $\alpha$ de décalage entre le premier et le second capteurs (1, 2; 24 25), ledit compteur (13; 35) étant connecté à son tour à une entrée d'adresses d'une mémoire (18; 40) contenant différentes valeurs d'angles d'avance à l'allumage, la sortie de ladite mémoire (18; 40) etant reliée à un second diviseur programmable décompteur (14; 35) destiné à décompter les signaux mémorisés à une fréquence fd correspondant à un signal par unité angulaire de rotation du moteur, et, à la fin du décomptage, à produire un signal d'actionnement desdits moyens de déclenchement de l'allumage (19, 20, 21; 36, 37, 38).

2. Dispositif suivant la revendication 1, caractérisé en ce que lesdits premier et second capteurs (1, 2) sont connectés chacun à une entrée d'un circuit basculeur (7) de commande desdits premier et second diviseurs programmables décompteurs (10, 14), un premier commutateur (8) du premier diviseur programmable-décompteur (10) entre un circuit (9) de mémorisation de la valeur $\beta$ de l'angle égal à la différence entre 360° et l'angle de décalage entre le premier et le second capteurs (1, 2) et l'entrée d'adresse de ladite mémoire (18) étant couplé à une sortie du circuit basculeur (7), un second commutateur (12) de la sortie dudit premier diviseur programmable décompteur (10) entre le compteur (13) et le second diviseur programmable décompteur (14) étant également couplé à une sortie du circuit basculeur (7).

3. Dispositif suivant la revendication 2, caractérisé en ce qu'entre ledit compteur (13) et ladite mémoire (18) est interposé un circuit de verrouillage (16), un contact (15) couplé à une sortie du circuit basculeur (7) étant interposé entre ledit compteur (13) et ledit circuit de verrouillage (16).

4. Dispositif suivant l'une quelconque des revendications précédentes, caractérisé en ce qu'il comporte en outre un capteur de pression (22) et un convertisseur analogique-numérique (23) connectés à des entrées d'adresses supplémentaires de ladite mémoire (18).

5. Dispositif suivant la revendication 1, caractérisé en ce que ledit compteur desdits signaux délivres par ledit premier diviseur programmable décompteur (30) et ledit second diviseur programmable décompteur sont réunis dans un seul compteur-décompteur (35) dont les entrées de comptage et de décomptage sont connectées à la sortie dudit premier diviseur programmable décompteur (30) par l'intermédiaire dudit second commutateur (34), ledit compteur-décompteur (35) comportant une sortie de comptage reliée à ladite mémoire (40) par l'intermédiaire dudit circuit de verrouillage (33) et une entrée supplémentaire de commande et de décomptage connectée à la sortie de ladite mémoire (40).

6. Dispositif suivant la revendication 5, caractérisé en ce qu'entre la mémoire (40) et ledit compteur-décompteur (35) est connecté un additionneur binaire (41), lui-même relié à des capteurs (43) de paramètres de fonctionnement supplémentaires, par l'intermédiaire d'un circuit (42) de corrections additives.

**Claims**

1. Device for initiating, in particular the ignition of an internal combustion engine, said device comprising means for measuring the speed of rotation of the engine which comprise a first and a second sensor (1, 2; 24, 24) offset by a predetermined angle from each other, and reference means (3; 27) movable in front of the sensors, mounted on a disc (4; 26) rigid with the shaft of the engine, and means (19, 20, 21; 36, 37, 38) for initiating the ignition as a function of the measured speed of rotation, characterized in that said means for measuring the speed of rotation further comprise a first programmable divider down-counter (10; 30) whose input is connected to a clock (11; 31), adapted to deliver thereto signals at a frequency fo and whose output is connected to a counter (13; 35) adapted to count the signals delivered by the programmable divider down-counter (10; 30), the frequency fc of said signals being equal to the frequency fo of the clock signals divided by the value of the angle $\beta$ equal to the difference between 360° and the angle $\alpha$ of the offset between the first and second sensors (1, 2; 24, 25) said counter being connected to an address input of a memory (18; 40) containing different values of ignition advance angles, the output of said memory (18; 40) being connected to a second programmable divider down-counter (14; 35) adapted to count down the stored signals at a frequency fd corresponding to one signal per angular unit of rotation of the engine shaft and, at the end of the countdown, to produce a signal actuating said ignition initiating means (19, 20, 21; 36, 37, 38).

2. Device as claimed in claim 1, characterized in that said first and second sensors (1, 2) are each connected to an input of a flipflop circuit (7) controlling said first and second programmable dividers down-counters (10, 14), a first switch (8) of the first programmable divider down-counter (10) between a memory circuit for storing the value $\beta$ of the angle equal to the difference between 360° and the angle of offset between the first and second sensors (1, 2) and the address input of said memory (18) being coupled with an output of the flipflop circuit (7), a second switch (12) of the output of the first programmable divider down-counter (10) between the counter (13) and the second programmable divider down-counter (14) being also coupled with an output of the flipflop circuit (7).

3. Device as claimed in claim 2, characterized in that between said counter (13) and the said memory (18), is interposed a locking circuit (16), a contact (15) coupled to an output of the flipflop circuit (7) being interposed between said counter (13) and the locking circuit (16).

4. Device as claimed in claim 1, 2 or 3, characterized in that it further comprises a pressure sensor (22) and an analog-to-digital converter (23) connected to additional address inputs of said memory (18).

5. Device as claimed in claim 1, characterized in that said counter of said signals delivered by the first programmable divider down-counter (30) and the second programmable divider down-counter are united in a single up-down-counter (35) whose count up and count down inputs are connected to the output of the first programmable divider down-counter (30) through said second switch (34), said up-down-counter (35) comprising a count up output connected to said memory (40) through the locking circuit (33) and an additional input controlling the count down connected to the output of said memory (40).

6. Device as claimed in claim 5, characterized in that an additional binary circuit (41) is connected between the memory (40) and the up-down-counter (35), the adder binary circuit (41) being connected to sensors (43) of additional operational parameters through an additive correction circuit (42).

**Patentansprüche**

1. Vorrichtung zum Auslösen insbesondere der Zündung einer Brennkraftmaschine mit Meßorganen für die Drehzahl der Brennkraftmaschine in Form eines ersten und eines zweiten Fühlers, die mit bezug aufeinander um einen bestimmten Winkel versetzt sind, einer Markierung (3; 27), die vor den Fühlern beweglich ist und auf einer mit der Motorwelle fest verbundenen Scheibe (4; 26) vorgesehen ist, und Organen (19, 21; 36, 38) zur Auslösung der Zündung in Abhängigkeit von der gemessenen Drehzahl, dadurch gekennzeichnet, daß die Organe zur Messung der Drehzahl gebildet werden, ferner durch einen ersten rückwärtszählenden programmierbaren Teiler (10; 30), dessen Eingang mit einem Taktgeber (11; 31) verbunden ist, der dazu dient, ihm Signale von einer Frequenz (fo) zu liefern, und dessen Ausgang mit einem Zähler (13; 35) verbunden ist, der dazu bestimmt ist, die Signale zu zählen, welche durch den Rückwärtszählenden programmierbaren Teiler (10; 30) geliefert werden, wobei die Frequenz (fc) dieser Signale gleich der Frequenz (fo) der Taktgebersignale ist, geteilt durch den Wert des Winkels $\beta$, der gleich der Differenz zwischen 360° und dem Versetzungswinkel ($\alpha$) zwischen dem ersten und dem zweiten Zähler (1, 2; 24, 25) ist, welcher Zähler (13; 35) seinerseits mit einem Adresseneingang eines Speichers (18; 40) verbunden ist, der verschiedene Zündungsvoreilungswinkelwerte enthält, wobei der Ausgang des erwähnten Speichers (18; 40) mit einem zweiten rückwärtszählenden programmierbaren Teiler (14; 35) verbunden ist, der bestimmt ist zur Rückwärtszählung der Signale, die mit einer Frequenz (fd) gespeichert sind, welche einem Signal je Drehungswinkeleinheit der Brennkraftmaschine entspricht, und am Ende der Rückwärtszählung zur Erzeugung eines Bestätigungssignals für die Zündungsauslöseorgane (19, 20, 21; 36, 37, 38).

2. Vorrichtung nach Anspruch 1, dadurch gekennzeichnet, daß der erste und der zweite Fühler (1, 2) je mit einem Eingang einer Kippschaltung (7) zur Steuerung des ersten und des zweiten rückwärtszählenden programmierbaren Teilers (10, 14) verbunden ist, ein erster Schalter (8) des ersten rückwärtszählenden programmierbaren Teilers (10) zwischen einem Speicherkreis (9) des Wertes ($\beta$) des Winkels gleich der Differenz zwischen 360° und dem Versetzungswinkel zwischen dem ersten und dem zweiten Fühler (1, 2), und der Adresseneingang des erwähnten Speichers (18) mit einem Ausgang der Kippschaltung (7) gekuppelt ist, ein zweiter Schalter (12) des Ausgangs des erwähnten rückwärtszählenden programmierbaren Teilers (10) zwischen dem Zähler (13) und dem zweiten rückwärtszählenden programmierbaren Teiler (14) ebenfalls mit einem Ausgang der Kippschaltung (7) gekuppelt ist.

3. Vorrichtung nach Anspruch 2, dadurch gekennzeichnet, daß zwischen den erwähnten Zähler (13) und den erwähnten Speicher (18) ein Sperrkreis (16) geschaltet ist, ein Kontakt (15), gekuppelt mit einem Ausgang der Kippschaltung (7), zwischen dem Zähler (13) und dem Sperrkreis (16) geschaltet ist.

4. Vorrichtung nach einem oder mehreren der vorangehenden Ansprüche, dadurch gekennzeichnet, daß ferner ein Druckfühler (22) und ein Analog-Digital-Wandler (23) vorgesehen sind, die zwischen zusätzlichen Adresseneingängen des erwähnten Speichers (18) geschaltet sind.

5. Vorrichtung nach Anspruch 1, dadurch gekennzeichnet, daß der Zähler der Signale, welche durch den ersten rückwärtszählenden programmierbaren Teiler (30) und den zweiten rückwärtszählenden programmierbaren Teiler geliefert werden, in einem einzigen Vorwärts- und Rückwärtszähler (35) vereinigt sind, dessen Vorwärtszähl- und Rückwärtszähl-Eingänge mit dem Ausgang des ersten rückwärtszählenden programmierbaren Teilers (30) mittels des zweiten Schalters (34) verbunden sind, der Vor- und Rückwärtszähler (356) einen Zählausgang aufweist, der mit dem Speicher (40) mittels des Sperrkreises (33) verbunden ist, und ein zusätzlicher Rückwärtszählungssteuerungseingang mit dem Ausgang des Speichers (40) verbunden ist.

6. Vorrichtung nach Anspruch 5, dadurch gekennzeichnet, daß zwischen dem Speicher (40) und dem Vor- und Rückwärtszähler (35) ein Binäraddierer (41) geschaltet ist, der seinerseits mit Fühler (43) von zusätzlichen Betriebsparametern mittels eines additiven Korrekturkreises (42) verbunden ist.

FIG.1

0 006 367

FIG.2

## FIG.3

## FIG.4

FIG.5

0006 367